# EUROPÄISCHE PATENTSCHRIFT

(11) **EP 1 296 118 B1**
(45) Veröffentlichungstag und Bekanntmachung des Hinweises auf die Patenterteilung: **19.08.2009**
(21) Anmeldenummer: 01810906.6
(22) Anmeldetag: 19.09.2001
(51) Int. Cl.: G01F 1/46, G01F 1/44, G01F 1/42, G01F 5/00, G01F 1/684, G01F 1/69

(54) **Vorrichtung zur Messung eines Gasverbrauchs**
Device to measure gas consumption
Dispositif pour la mesure de la consommation de gaz

(43) Veröffentlichungstag der Anmeldung: 26.03.2003
(73) Patentinhaber: EMS-PATENT AG, 7013 Domat/Ems (CH)
(72) Erfinder: Matter, Daniel, 5200 Brugg (CH); Kleiner, Thomas, 5442 Fislisbach (CH); Prêtre, Philippe, 5405 Baden-Dättwil (CH)
(74) Vertreter: Reitzle, Helmut

(56) Entgegenhaltungen:
- EP-A- 0 947 809
- WO-A-01/61282
- US-A- 1 702 274
- US-A- 3 803 921
- US-A- 4 825 704
- US-A- 4 959 990
- US-A- 5 753 825
- US-A- 6 142 148

## Beschreibung

### Technisches Gebiet

Die Erfindung bezieht sich auf das Gebiet der Gasmeter, insbesondere der industriellen Gasmeter. Sie bezieht sich auf eine Vorrichtung zur Messung eines Gasverbrauchs gemäss Oberbegriff des Patentanspruches 1. Die Vorrichtung eignet sich insbesondere zur Messung eines Gasflusses in einem Rohr mit einem grossen Durchmesser.

### Stand der Technik

Zur industriellen Gasdurchflussmessung werden im allgemeinen Turbinen-, Coriolis-, Differenzdruck und Ultraschall-Gasmeter eingesetzt. Diese Gasmeter müssen hohen Anforderungen an mechanische Präzision genügen und benötigen zum Teil eine aufwendige elektronische Auswertung. Im Haushalt- und Kleingewerbereich haben sich die Balgengaszähler durchgesetzt. Diese sind jedoch ungenau und zudem ziemlich gross.

Des weiteren wurde für den Haushalt- und Kleingewerbebereich vorgeschlagen, auf Mikrochips basierende Gasmeter einzusetzen, welche einen Massen- oder einen Energiefluss messen. Diese Gasmeter sind in einem Bypass zu einem Gasrohr angeordnet, wobei das Gasrohr in diesem Bereich eine Verjüngung aufweist, um die für die Messung notwendige Druckdifferenz respektive Strömung im Bypass zu erzeugen. Zur Messung des Massen- bzw. Energieflusses wird im wesentlichen das Gas über ein Heizelement des Gasmeters geleitet, wobei die Temperaturdifferenz des Gases vor und nach Überströmen des Heizelementes bestimmt wird. Diese Gasmeter weisen mehrere Vorteile auf: sie sind relativ klein, kostengünstig herstellbar und weisen trotzdem eine relativ hohe Messgenauigkeit mit einem maximalen Fehler von 1% und einen grossen Messbereich mit einem Verhältnis von bis zu 1000:1 auf. Da sie keine beweglichen Teile besitzen, also statische Gasmeter sind, arbeiten sie zudem praktisch verschleissfrei.

Diese Mikrochip-Gasmeter haben sich für kleine Rohrdurchmesser bewährt. Bei industrielle Gasleitungen tritt jedoch das Problem auf, dass die Rohrdurchmesser bis zu 200 mm betragen können. Dies hat zur Folge, dass ein das Rohr durchströmendes Gas ein stark asymmetrisches, undefiniertes Strömungsprofil aufweist. Dadurch lässt sich mittels des Gasmeters nicht das gesamte Strömungsprofil erfassen, die Messung des Durchflusses wird verfälscht und die Messgenauigkeit massiv beeinträchtigt. Gerade bei derartig grossen Gasleitungen ist jedoch eine Messgenauigkeit von 0.1 - 0.2 % notwendig, um den Gasbezug verbrauchergerecht zu ermitteln und abzurechnen.

Es ist aus US-A-5'596'152 bekannt, in ein Gasrohr einen Strömungs-Gleichrichter einzubauen, um das Strömungsprofil vor einem Turbinen-Gasmeter zu glätten. Dieser Strömungs-Gleichrichter besteht aus einer Platte mit mehreren kleinen Öffnungen, welche so bemessen und angeordnet sind, dass das Strömungsprofil nach Durchfluss der Platte annähernd gleichmässig ist.

WO 01/61282, US-A-4'825'704, US-A-4'959'990 und US-A-3'803'921 zeigen in einem Bypass angeordnete thermische Durchflußmeßelemente.

### Darstellung der Erfindung

Es ist Aufgabe der Erfindung, eine Vorrichtung zur Messung eines Gasverbrauchs zu schaffen, welche auch bei Gasrohren mit grossen Durchmessern einsetzbar ist.

Diese Aufgabe löst eine Vorrichtung mit den Merkmalen des Patentanspruches 1.

Erfindungsgemäss sind im Gasrohr, verteilt über dessen Querschnitt, mehrere Differenzdruckmittel angeordnet, welchen über Bypässe mit dem Gasrohr verbundene Gasmeter zugeordnet sind.

Durch die mehrfache Messung des Durchflusses mittels der Gasmeter lässt sich das Strömungsprofil mitteln beziehungsweise aufintegrieren. Dadurch lässt sich der Durchfluss auch bei asymmetrischen Strömungsprofilen mit einer relativ hohen Messgenauigkeit bestimmen.

In einer bevorzugten Ausführungsform sind die Differenzdruckmittel Profilelemente, welche mehrere Ein- und Auslassöffnungen aufweisen, die jeweils mit einem einzigen Bypass und einem Gasmeter verbunden sind. Dadurch wird eine Mittelung des Strömungsprofils erzielt.

In einer anderen bevorzugten Ausführungsform sind die Differenzdruckmittel Rohrbündel oder Venturirohre, welche eine Integration des Strömungsprofils ermöglichen.

Weitere vorteilhafte Ausführungsformen gehen aus den abhängigen Patentansprüchen hervor.

### Kurze Beschreibung der Zeichnung

Im folgenden wird der Erfindungsgegenstand anhand von bevorzugten Ausführungsbeispielen, welche in der beiliegenden Zeichnung dargestellt sind, erläutert. Es zeigen:
- Figur 1a: einen Querschnitt durch ein Gasrohr mit einer erfindungsgemässen Vorrichtung gemäss einer ersten Ausführungsform;
- Figur 1b: einen Längsschnitt durch die Ausführungsform gemäss Figur 1a;

- Figur 2a: einen Querschnitt durch eine zweite Ausführungsform;
- Figur 2b: einen Längsschnitt durch die Ausführungsform gemäss Figur 2a;

- Figur 3a: einen Querschnitt durch eine dritte Ausführungsform;
- Figur 3b: einen Längsschnitt durch die Ausführungsform gemäss Figur 3a;

- Figur 4: einen Querschnitt durch eine vierte Ausführungsform;

- Figur 5a: einen Querschnitt durch eine fünfte Ausführungsform;
- Figur 5b: einen Längsschnitt durch die Ausführungsform gemäss Figur 5a;

- Figur 6a: einen Querschnitt durch eine sechste Ausführungsform und
- Figur 6b: einen Längsschnitt durch die Ausführungsform gemäss Figur 6a.

### Wege zur Ausführung der Erfindung

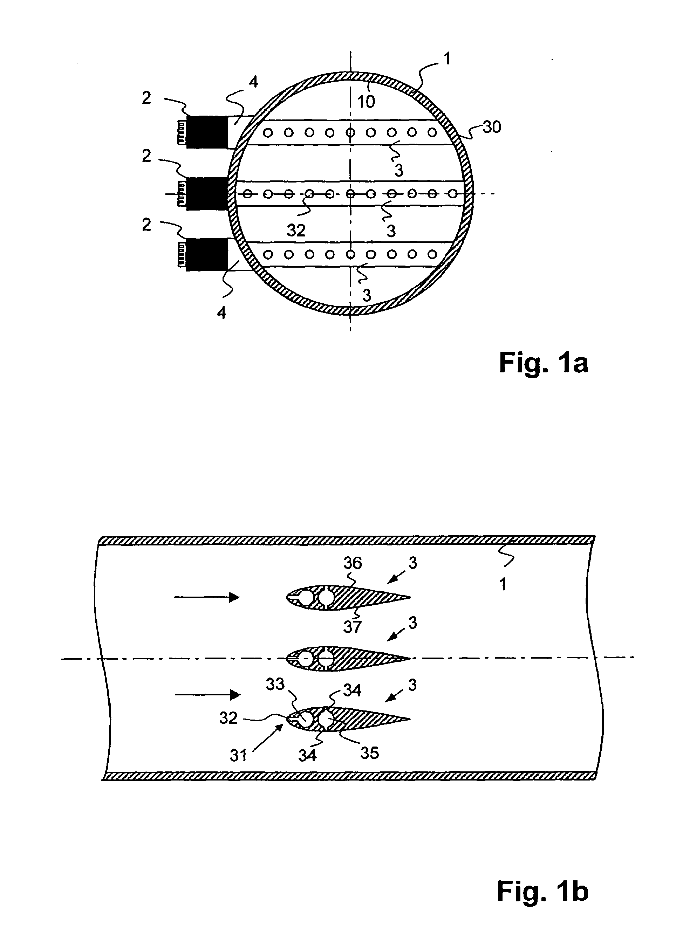

In den Figuren 1a und 1b ist ein erstes Ausführungsbeispiel der erfindungsgemässen Vorrichtung dargestellt. Ein Pfeil bezeichnet die Strömungsrichtung des Gases. In einem Gasrohr 1 sind mehrere, lagefixierte Differenzdruckmittel angeordnet. Im hier dargestellten Ausführungsbeispiel sind dies drei Profilelemente 3. Diese Profilelemente 3 haben einen in einer zur Strömungsrichtung senkrechten Ebene gleichbleibenden Querschnitt. Im hier dargestellten Beispiel besitzen sie die Form eines Staudruckprofils und sind somit symmetrisch ausgebildet. Jedes Profilelement 3 weist zwei gegenüberliegende Seitenflächen 30 auf, welche an einer inneren Mantelfläche 10 des Gasrohres 1 anliegen. Die Profilelemente 3 sind übereinander angeordnet, wobei ein mittleres Profilelement entlang dem Durchmesser des Gasrohres 1 verläuft und die zwei anderen gleichabständig oberhalb und unterhalb parallel zu diesem verlaufen. Jedes Profilelement 3 ist über einen Bypass 4 mit je einem Gasmeter 2 verbunden. Die Gasmeter 2 sind ausserhalb des Gasrohres 1 angeordnet. Als Gasmeter 2 sind statische Gasmeter, vorzugsweise die eingangs erwähnten, auf einem Mikrochip basierenden Gasmeter zur Messung des Massen- beziehungsweise Energieflusses eingesetzt. Beispielsweise weisen sie einen CMOS-Chip auf. Diese Gasmeter messen den Gasstrom mittels thermischen Messmethoden. Vorzugsweise sind alle Gasmeter identisch aufgebaut und weisen denselben Messbereich und Messempfindlichkeit auf. Bei Hochdruckanwendungen mit Drücken von bis zu 50 bar sind die Gassensoren der Gasmeter in einem Gehäuse angeordnet.

Vorzugsweise sind die Bypassleitungen beidseitig des Gassensors mit Absperrhahnen versehen, um ein Auswechseln des Sensors zu ermöglichen, ohne dass die Hauptgaszufuhr unterbrochen werden muss.

Jedes Profilelement 3 weist eine Stirnfläche 31 auf, welche in Strömungsrichtung vorne angeordnet ist. Diese Stirnfläche 31 ist von Einlassöffnungen 32 durchsetzt. In einer Variante sind die Einlassöffnungen 32 gleichabständig über die gesamte Breite der Stirnfläche 32 und somit über die gesamte Breite des jeweiligen Rohrsegmentes verteilt. In einer andere Variante sind sie so verteilt, dass sie eine optimale Mittelung ermöglichen. Die Einlassöffnungen 32 münden in einen gemeinsamen Zuführkanal 33, welcher mit einem ersten Arm des Bypasses 4 verbunden ist.

An der Ober- und Unterseite 36,37 des Profilelementes 3 sind Auslassöffnungen 34 angeordnet, welche ebenfalls in einen gemeinsamen Kanal, den Wegführkanal 35, münden. Dieser Wegführkanal 35 ist mit einem zweiten Arm des Bypasses 4 verbunden.

Ist das Rohr 1 gasdurchströmt, so staut sich das Gas an den Stirnflächen 31 der Profilelemente 3. Derjenige Anteil des Gases, welcher die Profilelemente an deren Oberseite 36 überströmt, weist eine erhöhte Strömungsgeschwindigkeit auf. Diese Beschleunigung bewirkt eine zur Messung notwendige Druckdifferenz zwischen den Einlassöffnungen 32 und den Auslassöffnungen 34. Ein Teil des Gases wird durch die Einlassöffnungen 32 über den Zuführkanal 33 und dem Bypass 4 zum Gasmeter 2 geleitet und strömt durch den Bypass 4 über den Wegführkanal 35 und die Austrittsöffnungen 34 zurück in das Rohr 1. Anhand dieses Teilstroms wird der Durchfluss bestimmt. Da die Einlassöffnungen 32 über den Rohrquerschnitt verteilt angeordnet sind, stellt dieser Teilstrom eine repräsentative Mittelung des Strömungsprofils entlang des Profilelementes 3 dar. Durch die Verwendung von mehreren Profilelementen 3 lässt sich zudem das Strömungsprofil über den gesamten Querschnitt integrieren. Das Gasmeter umfasst ferner eine Auswerteelektronik mit Mitteln zur gewichteten Mittelung der Messwerte der einzelnen Gasmeter.

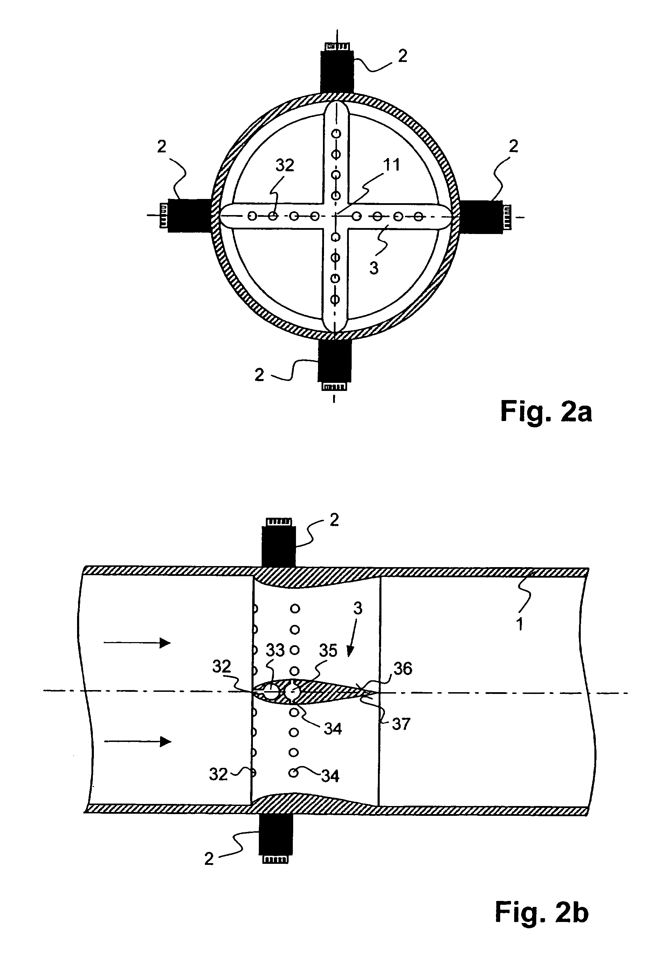

Wie in den Figuren 2a und 2b dargestellt ist, lassen sich anstelle der drei auch vier Profilelemente 3 verwenden, welche nun im Querschnitt des Rohres 1 ein Kreuz bilden. Das Kreuz weist vier freie Schenkel auf, welche mit ihren freien Enden an der inneren Mantelfläche 10 des Rohres 1 anliegen. Auch hier weist jedes Profilelement 3 einen Zuführ- und einen Wegführkanal 33,35 auf, welche sich mindestens annähernd von einer Mittelachse 11 des Rohres 1 nach aussen zur Rohrmantelung hin erstrecken und wiederum mit einem gemeinsamen Bypass 4 und einem zugeordneten Gasmeter 2 verbunden sind. Diese Anordnung weist den Vorteil auf, dass sie rotationssymmetrisch ist und somit einen optimalen Mittel- beziehungsweise Integrationswert des Strömungsprofils liefert.

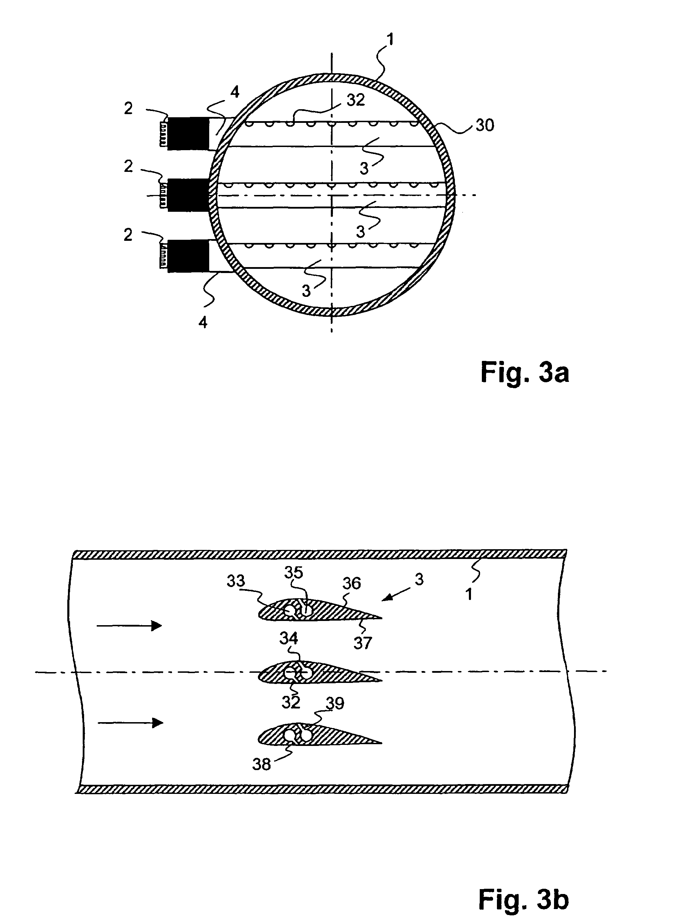

In einer dritten Ausführungsform gemäss den Figuren 3a und 3b weisen die Profilelemente 3 die Form von Auftriebsprofilen auf. Sie sind somit asymmetrisch geformt und entsprechen im wesentlichen einem Flugzeugflügel-Profil. Die Einlassöffnungen 32 sind nun auf der Unterseite 37 des Profilelementes 3 angeordnet und die Auslassöffnungen 34 auf der Oberseite 36. Dabei weisen die Einlassöffnungen 32 erste Verbindungskanäle 38 zum Einlasskanal 33 auf, welche in Strömungsrichtung schräg nach hinten gerichtet sind. Die Auslassöffnungen 34 sind über zweite Verbindungskanäle 39 mit dem Wegführkanal 35 verbunden, wobei die zweiten Verbindungskanäle 39 schräg nach vorne gerichtet sind.

Im hier dargestellten Beispiel sind wiederum drei Profilelemente 3 vorhanden, welche übereinander angeordnet sind und mit ihren seitlichen Flächen 30 an der inneren Mantelfläche 10 des Gasrohres 1 anliegen.

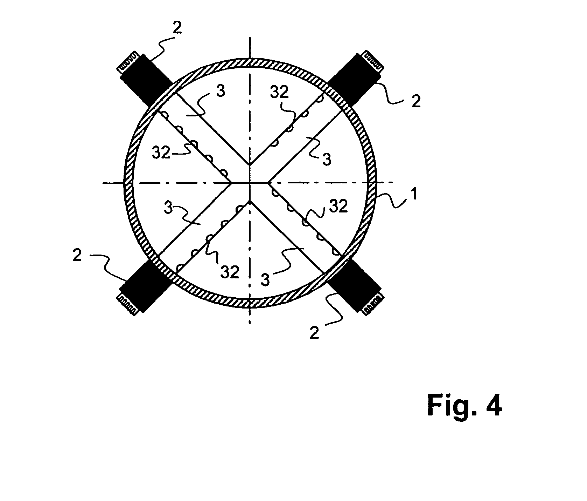

In der in der Figur 4 dargestellten Ausführungsform sind vier Auftriebs-Profilelemente 3 vorhanden, welche zu einem Kreuz angeordnet sind. Jedes äussere Ende der Profilelemente 3 ist dabei mit einem Bypass 4 und einem Gasmeter 2 verbunden.

Auch bei der Verwendung von Auftriebs-Profilelementen 3 wird der zur Messung notwendige Druckunterschied durch die unterschiedlichen Strömungsgeschwindigkeiten an der Profiloberseite 36 und Profilunterseite 37 erzeugt. Der Vorteil dieser Profilelemente 3 liegt darin, dass Schmutzpartikel, welche im Gasstrom mitgetragen werden, nicht in die Zuführkanäle 33 gelangen und die Gasmeter 2 somit besser gegen allfällige Verschmutzung geschützt sind.

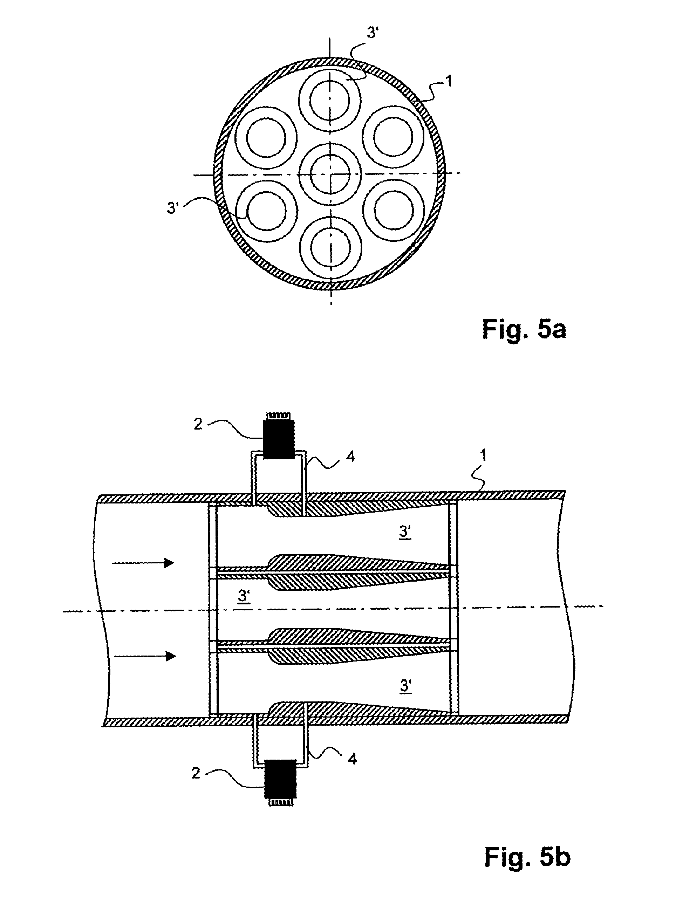

In einer fünften Ausführungsform gemäss den Figuren 5a und 5b sind die Differenzdruckmittel Venturirohre 3', welche im Gasrohr 1 angeordnet sind. Die Venturirohre 3' weisen Ein- und Auslassöffnungen auf, welche die Ein- beziehungsweise Ausgänge von Bypässen 4 bilden. Jedem Bypass 4 ist ein ausserhalb des Gasrohres 1 angeordnetes Gasmeter 2 und ein Venturirohr 3' zugeordnet. Das Gasrohr 1 ist somit in mehrere kleinere Messeinheiten mit kleineren Durchmessern unterteilt. Die durch die einzelnen Gasmeter 2 ermittelten Messwerte lassen sich zu einem Strömungsprofil des gesamten Querschnittes des Gasrohres 1 beziehungsweise zu einer gesamten Durchflussmenge integrieren.

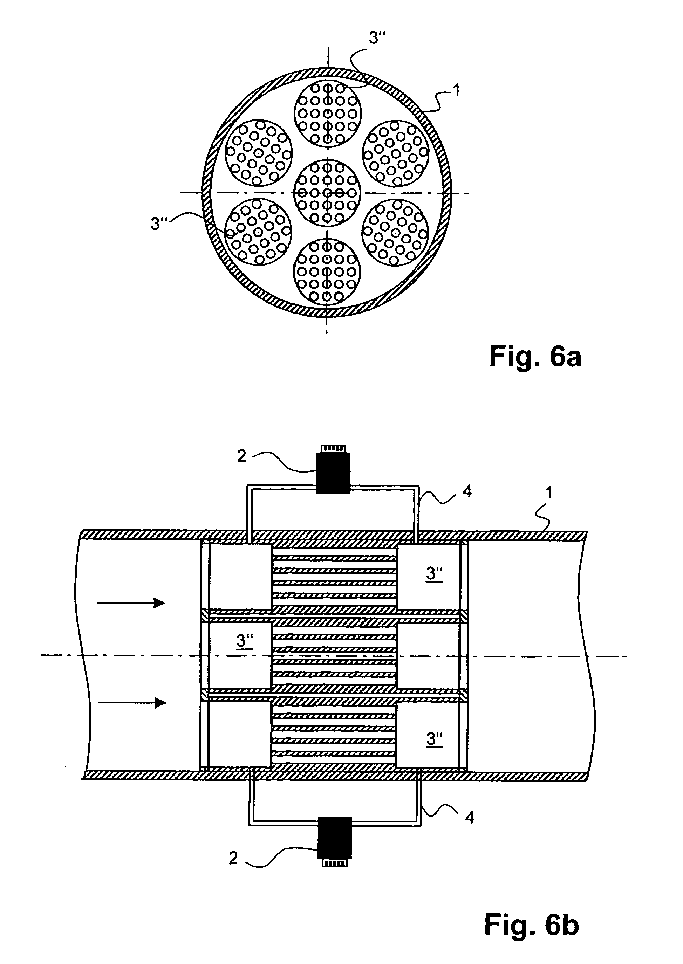

Die Differenzdruckmittel in der Ausführungsform gemäss den Figuren 6a und 6b sind Rohrbündel 3'', welche im Gasrohr 1 angeordnet sind. Jeder mit einem Gasmeter 2 verbundener Bypass 4 ist wiederum einem Rohrbündel 3'' zugeordnet. Die Rohrbündel 3'' können, wie hier dargestellt ist, durch Rohrabschnitte mit rundem Querschnitt gebildet sein. Sie können aber auch aus Rohrabschnitten mit einem wabenförmigen oder einem anders geformten Querschnitt bestehen. Auch hier ist der Querschnitt des Gasrohres 1 in Teilbereiche unterteilt, so dass sich das Strömungsprofil beziehungsweise die gesamte Durchflussmenge aus den einzelnen Teilmessungen integrieren lässt.

Die erfindungsgemässe Vorrichtung ermöglicht die Verwendung von kostengünstigen, verschleissarmen, statischen Gasmetern auf Mikrochip-Basis für industrielle Anlagen und für grosse Rohrdurchmesser, ohne dass die Messgenauigkeit vermindert wird.

### Bezugszeichenliste

- 1: Gasrohr
- 10: innere Mantelfläche
- 11: Mittelachse
- 2: Gasmeter
- 3: Profilelemente
- 3': Venturirohre
- 3'': Rohrbündel
- 30: Seitenfläche
- 31: Stirnfläche
- 32: Einlassöffnungen
- 33: Zuführkanal
- 34: Auslassöffnungen
- 35: Wegführkanal
- 36: Oberseite
- 37: Unterseite
- 38: Erster Verbindungskanal
- 39: Zweiter Verbindungskanal
- 4: Bypass

## Patentansprüche

1. Vorrichtung zur Messung eines Gasverbrauchs mit mindestens einem Gasmeter (2), wobei das mindestens eine Gasmeter (2) in einem Bypass (4) zu einem Gasrohr (1) angeordnet ist und wobei im Gasrohr (1) mindestens ein lagefixiertes Differenzdruckmittel (3, 3', 3'') angeordnet ist, dass dem mindestens einen Gasmeter zugeordnet ist,
**dadurch gekennzeichnet, dass**
mehrere Differenzdruckmittel(3, 3', 3'') vorhanden sind, welche über eine Querschnittsfläche des Gasrohres (1) verteilt angeordnet sind, wobei jedes Differenzdruckmittel (3, 3', 3'') eine Einlass- und Auslassöffnung aufweist und jedes Differenzdruckmittel mit einem in einem Bypass (4) angeordneten Gasmeter (2) verbunden ist und Mittel zur gewichteten Mittelung von Messwerten der einzelnen Gasmeter vorhanden sind.

2. Vorrichtung nach Anspruch 1,
**dadurch gekennzeichnet, dass** die Differenzdruckmittel Profilelemente (3) sind, dass neben den Einlassöffnungen (32) und Auslassöffnungen (34) innerhalb jedes Profilelementes (3) ein Zuführ- und Wegführkanal (33, 35) vorhanden ist, wobei der Zuführkanal (33) die Einlassöffnungen (32) mit dem Bypass (4) verbindet und der Wegführkanal (35) den Bypass (4) mit den Auslassöffnungen (34) verbindet.

3. Vorrichtung nach Anspruch 2,
**dadurch gekennzeichnet, dass** die Profilelemente (3) zwei gegenüberliegende Seitenflächen (30) aufweisen, welche an einer inneren Mantelfläche (10) des Gasrohres (1) anliegen.

4. Vorrichtung nach Anspruch 2,
**dadurch gekennzeichnet, dass** die Profilelemente (3) einen Längsschnitt in Form eines Staudruckprofils aufweisen, wobei die Einlassöffnungen (32) in Strömungsrichtung des Gases vorne und die Auslassöffnungen (34) mindestens annähernd in einer zur Strömungsrichtung senkrechten Ebene auf einer Oberfläche (36) und Unterseite (37) des Profilelementes (3) angeordnet sind.

5. Vorrichtung nach Anspruch 2,
**dadurch gekennzeichnet, dass** die Profilelemente (3) einen Längsschnitt in Form eines Auftriebsprofils aufweisen, wobei die Einlassöffnungen (32) auf einer Unterseite (37) des Profilelementes (3) und die Auslassöffnungen (34) auf einer Oberseite (36) des Profilelementes (3) angeordnet sind.

6. Vorrichtung nach einem der Ansprüche 4 oder 5,
**dadurch gekennzeichnet, dass** mehrere Profilelemente(3) in Strömungsrichtung senkrecht übereinander im Gasrohr (1) angeordnet sind.

7. Vorrichtung nach einem der Ansprüche 4 oder 5,
**dadurch gekennzeichnet, dass** vier Profilelemente (3) ein gemeinsames Kreuz bilden, welches vier Schenkel aufweist, die an ihren freien Enden einer inneren Mantelfläche (10) des Gasrohres (1) anliegen.

8. Vorrichtung nach Anspruch 1,
**dadurch gekennzeichnet, dass** die Differenzdruckmittel im Gasrohr (1) angeordnete Venturirohre (3') sind.

9. Vorrichtung nach Anspruch 1,
**dadurch gekennzeichnet, dass** die Differenzdruckmittel Rohrbündel (3'') aus Rohrabschnitten sind.

10. Vorrichtung nach Anspruch 9,
**dadurch gekennzeichnet, dass** die Rohrabschnitte einen runden oder wabenförmigen Querschnitt aufweisen.

## Claims

1. An apparatus for measuring gas consumption with at least one gas meter (2), wherein the at least one gas meter (2) is arranged in a by-pass (4) to a gas pipe (1) and wherein a differential-pressure means (3, 3', 3"), which is fixed in position and which is associated with the at least one gas meter, is arranged in the gas pipe (1), **characterized in that** a plurality of differential-pressure means (3, 3', 3") are present which are arranged distributed over a cross-sectional face of the gas pipe (1), wherein each differential-pressure means (3, 3', 3") has an inlet opening and an outlet opening and each differential-pressure means is connected to a gas meter (2) arranged in a by-pass (4), and means for the weighted averaging of measurement values of the individual gas meters are present.

2. An apparatus according to Claim 1, **characterized in that** the differential-pressure means are profile elements (3), and a supply duct (33) and a removal duct (35) are present next to the inlet openings (32) and the outlet openings (34) inside each profile element (3), wherein the supply duct (33) connects the inlet openings (32) to the by-pass (4) and the removal duct (35) connects the by-pass (4) to the outlet openings (34).

3. An apparatus according to Claim 2, **characterized in that** the profile elements (3) have two opposite lateral faces (30) which rest against an internal surface area (10) of the gas pipe (1).

4. An apparatus according to Claim 2, **characterized in that** the profile elements (3) have a longitudinal section in the form of a back-pressure profile, wherein the inlet openings (32) are arranged at the front in the flow direction of the gas and the outlet openings (34) are arranged on a surface (36) and an underside (37) of the profile element (3) at least approximately in a plane at a right angle to the flow direction.

5. An apparatus according to Claim 2, **characterized in that** the profile elements (3) have a longitudinal section in the form of an up-lift profile, wherein the inlet openings (32) are arranged on an underside (37) of the profile element (3) and the outlet openings (34) are arranged on a top side (36) of the profile element (3).

6. An apparatus according to one of Claims 4 or 5, **characterized in that** a plurality of profile elements (3) are arranged vertically one above the other in the gas pipe (1) in the flow direction.

7. An apparatus according to one of Claims 4 or 5, **characterized in that** four profile elements (3) form a common cross which has four arms which rest [with] their free ends [against] an internal surface area (10) of the gas pipe (1).

8. An apparatus according to Claim 1, **characterized in that** the differential-pressure means are Venturi tubes (3') arranged in the gas pipe (1).

9. An apparatus according to Claim 1, **characterized in that** the differential-pressure means are bundles of tubes (3") comprising tube portions.

10. An apparatus according to Claim 9, **characterized in that** the tube portions have a round or a honeycomb-shaped cross-section.

## Revendications

1. Dispositif de mesure d'une consommation de gaz, comprenant au moins un compteur à gaz (2) , dans lequel on aménage le au moins un compteur à gaz (2) dans une dérivation (4) d'une conduite de gaz (1) et dans lequel on aménage dans la conduite de gaz(1) au moins un moyen de pression différentielle (3, 3', 3") fixé en place, qui est affecté à l'au moins un compteur à gaz,
**caractérisé en ce que**
il y a plusieurs moyens de pression différentielle (3, 3', 3"), qui sont répartis sur une surface de section transversale de la conduite de gaz (1), chaque moyen de pression différentielle (3, 3', 3") présentant une ouverture d'entrée et une ouverture de sortie et chaque moyen de pression différentielle étant raccordé à un compteur à gaz (2) aménagé dans une dérivation (4), et il y a des moyens de calcul de moyenne pondérée de valeurs de mesure des compteurs à gaz individuels.

2. Dispositif selon la revendication 1,
**caractérisé en ce que** les moyens de pression différentielle sont des éléments profilés (3), il y a à l'intérieur de chaque élément profilé (3), outre les ouvertures d'entrée (32) et les ouvertures de sortie (34), un canal d'alimentation et un canal d'évacuation (33, 35), le canal d'alimentation (33) raccordant les ouvertures d'entrée (32) à la dérivation (4) et le canal d'évacuation (35) raccordant la dérivation (4) aux ouvertures de sortie (34).

3. Dispositif selon la revendication 2,
**caractérisé en ce que** les éléments profilés (3) présentent deux surfaces latérales opposées (30), qui s'appliquent sur une surface d'enveloppe interne (10) de la conduite de gaz (1).

4. Dispositif selon la revendication 2,
**caractérisé en ce que** les éléments profilés (3) présentent une section longitudinale sous la forme d'un profil de pression dynamique, dans lequel les ouvertures d'entrée (32) sont aménagées dans la direction d'écoulement du gaz vers l'avant et les ouvertures de sortie (34) sont aménagées au moins approximativement dans un plan perpendiculaire à la direction d'écoulement sur une surface (36) et une face inférieure (37) de l'élément profilé (3).

5. Dispositif selon la revendication 2,
**caractérisé en ce que** les éléments profilés (3) présentent une section longitudinale sous la forme d'un profil de portance, dans lequel les ouvertures d'entrée (32) sont aménagées sur une face inférieure (37) de l'élément profilé (3) et les ouvertures de sortie (34) sur une face supérieure (36) de l'élément profilé (3).

6. Dispositif selon l'une quelconque des revendications 4 ou 5, **caractérisé en ce que** plusieurs éléments profilés (3) sont aménagés l'un au-dessus de l'autre dans la conduite de gaz (1) perpendiculairement à la direction d'écoulement.

7. Dispositif selon l'une quelconque des revendications 4 ou 5, **caractérisé en ce que** quatre éléments profilés (3) forment une croix commune qui présente quatre branches, qui s'appliquent à leurs extrémités libres sur une surface d'enveloppe interne (10) de la conduite de gaz (1).

8. Dispositif selon la revendication 1,
**caractérisé en ce que** les moyens de pression différentielle sont des tubes de Venturi (3') aménagés dans la conduite de gaz (1).

9. Dispositif selon la revendication 1,
**caractérisé en ce que** les moyens de pression différentielle sont des faisceaux tubulaires (3") constitués de segments de tubes.

10. Dispositif selon la revendication 9,
**caractérisé en ce que** les segments de tubes présentent une section transversale ronde ou en nid d'abeille.
